# EUROPÄISCHE PATENTANMELDUNG

(11) **EP 2 789 450 A1**
(43) Veröffentlichungstag der Anmeldung: **15.10.2014**
(21) Anmeldenummer: 13162831.5
(22) Anmeldetag: 09.04.2013
(51) Int. Cl.: B29C 65/08, B06B 3/00, B65B 51/22

(54) **Vorrichtung zum Verschweissen mittels Ultraschall**

(71) Anmelder: Telsonic Holding AG, 9552 Bronschhofen (CH)
(72) Erfinder: Solenthaler, Peter, 9543 St. Margarethen (CH)
(74) Vertreter: Hepp Wenger Ryffel AG

(57) **Zusammenfassung**

Die Erfindung betrifft eine Vorrichtung (1) zum Verschweissen mittels Ultraschall, umfassend eine Sonotrode (2) mit einem länglichen Sonotrodenkopf (4), an welchem eine in Längsrichtung des Sonotrodenkopfs (4) ausgerichtete längliche Schweissfläche (5) ausgebildet ist. Weiter umfasst die Vorrichtung (1) wenigstens zwei Konverter (11) zur Anregung von Ultraschallschwingungen der Sonotrode (2) in einer Wirkrichtung (B), wobei die Wirkrichtung (B) bevorzugt im Wesentlichen senkrecht zur Längsrichtung (A) des Sonotrodenkopfs (14) ausgerichtet ist. Schliesslich umfasst die Vorrichtung (1) einen Reaktionskörper (3) als Reaktionsmasse, wobei die wenigstens zwei Konverter (11) zwischen der Sonotrode (2) und dem Reaktionskörper (3) angeordnet sind.

## Beschreibung

Die Erfindung betrifft eine Vorrichtung zum Verschweissen mittels Ultraschall gemäss dem Oberbegriff des unabhängigen Anspruchs.

Vorrichtungen zum Verschweissen mittels Ultraschall weisen in der Regel einen Konverter sowie eine Sonotrode auf. Der Konverter setzt eine von einem Generator erzeugte elektrische Oszillation z.B. mittels piezoelektrischer Materialien in mechanische Bewegung um. Die so erzeugten mechanischen Schwingungen werden in die Sonotrode eingeleitet, welche zu Schwingungen möglichst in einem Eigenmode angeregt wird. Die Sonotrode weist zum Einbringen der Schwingungen in Schweissgut typischerweise an einem Sonotrodenkopf eine Schweissfläche auf. Zusätzlich kann ein Booster vorgesehen sein, welcher eine Schwingungsamplitude an der Schweissfläche verstärkt. Der Booster kann dabei z.B. durch eine spezielle geometrische Ausbildung der Sonotrode bzw. des Sonotrodenkopfs erreicht werden.

Derartige Vorrichtungen kommen unter anderem in Verpackungsanlagen zum Einsatz, bei welchen ein Verpackungsmaterial mit z.B. einem Laminat aus Papier und thermoplastischem Material beispielsweise zu einem Behälter geformt wird, welcher nach einem Befüllen verschlossen wird. Typisch haben die Behälter eine rechteckige, parallelepipedische oder tetraedische Gestalt und sind mit einer Flüssigkeit wie z.B. einem Saft oder Milch gefüllt. Der Behälter wird im Allgemeinen aus einer Endlosbahn des Verpackungsmaterials geformt und nach dem Befüllen dichtend versiegelt und abgetrennt. Typischerweise kommt beim Formen und Versiegeln des Behälters ein Wärmeschweissverfahren zum Einsatz. Während die Wärmeenergie je nach Verpackungsmaterial auf unterschiedliche Weise eingebracht werden kann (z.B. durch Induktion, falls das Verpackungsmaterial eine leitende Lage wie z.B. eine Aluminiumfolie umfasst), hat sich gezeigt, dass das Einbringen von Ultraschallschwingungen zur Erwärmung des Laminats im Schweissbereich besonders vielseitig anwendbar ist.

Je nach Form der Behälter werden allerdings vergleichsweise lange Schweissnähte benötigt. Um ein gleichmässiges Verschweissen und/oder Versiegeln zu erreichen, müssen die Ultraschallschwingungen möglichst gleichförmig über den gesamten Schweissbereich eingebracht werden.

Bekannte Vorrichtungen, wie z.B. in der EP 615 907 A1 beschrieben, weisen hierzu eine Mehrzahl von nebeneinander angeordneten Sonotroden mit länglichen Schweissflächen auf. Jede Sonotrode wird von jeweils einem Konverter angeregt, welcher auf einer Rückseite der Sonotrode angeordnet ist. Jeder Konverter trägt als Reaktionsmasse ein Ausgleichsgewicht. Um gesamthaft eine Sonotrode mit einer halben Wellenlänge zu schaffen, sind an der Rückseite der Sonotrode zudem mehrere Reaktionskörper beim Konverter angeordnet. Aufgrund der Anordnung einzelner Sonotroden nebeneinander ist die Schweissfläche am Übergang von einer Sonotrode zur benachbarten unterbrochen. Eine mit dieser Anordnung erzeugte Schweissnaht, insbesondere bei der Verschweissung von dünnen Materialien wie Folien, kann somit an diesen Stellen ebenfalls unterbrochen sein. Diese Lücken der Schweissnaht führen z.B. zu einer ungewünschten Leckage, insbesondere bei der Verpackung von Flüssigkeiten.

WO 2011/117119 A1 schlägt daher vor, eine einstückig ausgebildete längliche Sonotrode mit drei, über deren Länge verteilt angeordneten, Konvertern anzuregen. Eine gleichförmige Anregung der Sonotrode ist dabei wesentlich, da bei ungleichmässiger mechanischer Belastung frühzeitige Materialermüdung und Schäden auftreten können. Die Konverter der WO 2011/117119 A1 sind jeweils in zugehörigen Aussparungen angeordnet, welche an einer Rückseite der Sonotrode ausgebildet sind und die darin angeordneten Konverter weitgehend vollständig ummanteln. Die Sonotrode weist senkrecht zu einer Längsrichtung hindurch tretende Schlitze auf, welche für ein gleichmässigeres Schweissresultat ungewünschte Schwingungsmoden reduzieren. Diese Sonotrode liefert zwar befriedigende Schweissresultate, ist aber aufwändig und kostenintensiv in der Herstellung. Zudem weist die Sonotrode eine vergleichsweise komplizierte und platzintensive Konstruktion auf.

Es ist daher die Aufgabe der Erfindung, die Nachteile des Standes der Technik zu überwinden. Insbesondere ist es eine Aufgabe der Erfindung, bei kompakter Bauweise eine kostengünstig und einfach herzustellende Vorrichtung zum Verschweissen mittels Ultraschall zu schaffen, welche insbesondere auch bei länglicher Bauweise der Sonotrode, eine gleichmässige Verschweissung sicherstellt. Zudem soll ein effizienter Energieeintrag in das Schweissgut sichergestellt sein.

Diese Aufgaben werden durch die Merkmale des unabhängigen Anspruchs gelöst. Dieser betrifft eine Vorrichtung zum Verschweissen mittels Ultraschall, umfassend eine Sonotrode mit einem länglichen Sonotrodenkopf, an welchem eine in Längsrichtung des Sonotrodenkopfs ausgerichteten längliche Schweissfläche ausgebildet ist, wenigstens zwei Konverter zur Anregung von Ultraschallschwingungen der Sonotrode in einer Wirkrichtung, wobei die Wirkrichtung bevorzugt im Wesentlichen senkrecht zur Längsrichtung des Sonotrodenkopfs ausgerichtet ist, sowie einen Reaktionskörper als Reaktionsmasse. Die Vorrichtung zeichnet sich dadurch aus, dass die wenigstens zwei Konverter zwischen der Sonotrode und dem Reaktionskörper angeordnet sind. Insbesondere sind die Sonotrode und der Reaktionskörper dabei in der Wirkrichtung mit dazwischen liegenden Konvertern hintereinander angeordnet.

Der als Reaktionsmasse wirkende Reaktionskörper ist bevorzugt als separates Bauteil, von der Sonotrode getrennt ausgebildet. Reaktionskörper und Sonotrode sind jeweils bevorzugt einstückig, als durchgehendes Bauteil ausgebildet. Indem nur der einzelne Reaktionskörper vorhanden ist, welcher als Reaktionsmasse für die wenigstens zwei Konverter und die Sonotrode dient, kann die Vorrichtung eine besonders einfache Bauweise aufweisen. Zudem wird über den Reaktionskörper eine zusätzlich Kopplung geschaffen, mit welcher das Schwingungsverhalten der Vorrichtung gezielt zugunsten einer gleichmässigen Schwingung der Schweissfläche optimiert werden kann. Insbesondere kann durch gezielte Gestaltung des Reaktionskörpers ungewünschtes Schwingungsverhalten der Sonotrode vergleichsweise einfach zusätzlich kompensiert werden.

Indem die Konverter zwischen Reaktionskörper und Sonotrode angeordnet sind, kann der Reaktionskörper gleichzeitig als Gegengewicht der Konverter wie auch als Reaktionsmasse für die Sonotrode wirken. Indem die Bauteile z.B. in der Wirkrichtung gestapelt angeordnet sein können (Konverter zwischen Sonotrode und Reaktionskörper), entspricht die Anordnung zudem auf natürliche Weise der durch die Wirkrichtung vorgegebenen Richtung.

Der Sonotrodenkopf kann auf bekannte Weise z.B. klingenförmig gestaltet sein, und im Querschnitt senkrecht zur Längsrichtung von der Schweissfläche zumindest abschnittweise längs konkav gekrümmter Kurven zu der Rückseite hin auseinander laufen. Die Kurven können dabei z.B. von einem Teilkreis, einer Exponentialfunktion oder von einer Katenoide vorgegeben sein. Der Sonotrodenkopf kann auf bekannte Weise in Querrichtung von in der Wirkrichtung ausgerichteten Schlitzen durchbrochen sein, um unerwünschte Schwingungsmoden z.B. senkrecht zur Wirkrichtung zu kompensieren oder zu eliminieren.

Es versteht sich, dass je nach Länge des Sonotrodenkopfs eine Mehrzahl von Konvertern vorhanden sein kann. Bevorzugt sind die Konverter dabei zwischen dem Reaktionskörper und der Sonotrode angeordnet. Allerdings sind grundsätzlich auch Vorrichtungen denkbar, bei welchen Gruppen von wenigstens zwei Konvertern jeweils ein Reaktionskörper zugeordnet ist.

Bevorzugt weist die Sonotrode eine weitgehend durchgehende, insbesondere plane, Rückseite auf, welche der Schweissfläche in der Wirkrichtung gegenüberliegt und an welcher die wenigstens zwei Konverter anliegen. Aufgrund der erfindungsgemässen Anordnung der wenigstens zwei Konverter zwischen der Sonotrode und dem Reaktionskörper müssen an einer Rückseite der Sonotrode keine Strukturen vorhanden sein, welche als Reaktionskörper dienen und/oder zur Aufnahme der Konverter ausgebildet sind. Selbstverständlich können je nach Erfordernis z.B. geringfügige Vertiefungen zur Anordnung der Konverter ausgebildet sein. Grundsätzlich ist dies in der Herstellung zwar aufwändiger, kann aber je nach Erfordernis allenfalls dennoch in Betracht gezogen werden. Bevorzugt ist die Rückseite der Sonotrode allerdings als weitgehend durchgehende, plane Fläche ausgebildet. Es versteht sich, dass die weitgehend durchgehende Rückseite z.B. von Schraublöchern und/oder Aussparungen zur Massenreduktion stellenweise durchbrochen sein kann.

Ebenso weist der Reaktionskörper mit Vorteil sonotrodenseitig eine, insbesondere plane, Anlagefläche auf, an welcher die wenigstens zwei Konverter anliegen. Der Reaktionskörper und/oder die Sonotrode können dabei derart ausgebildet sein, dass keine Struktur des jeweiligen Bauteils über die Anlagefläche bzw. Rückseite zum jeweils anderen Bauteil hin hinausragt. Es versteht sich, dass auf der Anlagefläche geringfügige Aussparungen oder andere Strukturen vorhanden sein können. Beispielsweise können gegebenenfalls z.B. geringfügige Vertiefungen zur Anordnung der Konverter ausgebildet sein. Grundsätzlich ist dies in der Herstellung zwar aufwändiger, kann aber je nach Erfordernis allenfalls dennoch in Betracht gezogen werden.

Bevorzugt sind die Anlagefläche des Reaktionskörpers und die Rückseite der Sonotrode weitgehend parallel zueinander ausgerichtet. Auf diese Weise können, z.B. weitgehend kreiszylinderförmig ausgebildete, Konverter mit einfach auszubildenden planparallelen Stirnseiten auf der Rückseite einerseits und auf der Anlagefläche andererseits angeordnet werden. Insbesondere ist keine besondere Ausbildung der Konverter erforderlich. Die Konverter können dabei direkt auf der jeweiligen Fläche anliegen oder über Kontaktelemente wie z.B. Kontaktplatten oder Kontaktscheiben. Die Kontaktelemente können dabei Teil der Konverter oder separate Bauteile sein, welche zwischen Konverter und der entsprechenden Fläche angeordnet sind.

Die wenigstens zwei Konverter können dabei zwischen dem Reaktionskörper und der Sonotrode eingeklemmt sein. Der Reaktionskörper, die wenigstens zwei Konverter und die Sonotrode bilden somit einen konstruktiv einfach herzustellenden Stapel. Bei z.B. entsprechender Verschraubung des Reaktionskörpers mit der Sonotrode kann durch die Klemmwirkung auf einfache Weise ein optimaler mechanischer wie auch thermischer Kontakt sowohl des Reaktionskörpers als auch der Sonotrode mit den Konvertern hergestellt werden. Damit können zum einen die mechanischen Schwingungen der Konverter optimal in die Sonotrode eingebracht werden. Zum anderen kann eine Wärmeentwicklung in den Konvertern optimal über Sonotrode und/oder Reaktionskörper abgeführt werden.

Bevorzugt ist jedem der wenigstens zwei Konverter eine Schraube zugeordnet, mit welcher der Reaktionskörper mit der Sonotrode, insbesondere durch einen Durchtritt in dem jeweiligen Konverter hindurch, verschraubt ist. Damit kann auf einfache Weise eine optimale Klemmwirkung sichergestellt werden, welche bezüglich einer Wirkrichtung der Konverter zentriert ist.

Bevorzugt ist der Reaktionskörper länglich, insbesondere als Balken, ausgebildet und ist mit seiner Längsrichtung parallel zur Längsrichtung des Sonotrodenkopfs ausgerichtet. Auf diese Weise ist der Reaktionskörper optimal an die Sonotrode angepasst und kompakt ausgebildet. Bevorzugt entspricht eine Dimensionierung des Reaktionskörpers in Längsrichtung im Wesentlichen der entsprechenden Dimensionierung des Sonotrodenkopfs.

Mit Vorteil sind die wenigstens zwei Konverter in Längsrichtung des Sonotrodenkopfs hintereinander angeordnet. Auf diese Weise werden die von den Konvertern eingebrachten Schwingungen optimal auf die längliche Sonotrode verteilt. Bei mehr als zwei Konvertern weisen benachbarte Konverter bevorzugt jeweils einen konstanten Abstand zueinander auf. Grundsätzlich ist es auch denkbar, im Falle mehrerer Konverter diese in einem Muster wie z.B. in zwei parallelen Reihen oder in einem z.B. schwingungsmässig günstigen Muster zueinander anzuordnen. In der Regel ist aufgrund der länglichen Ausbildung des Sonotrodenkopfs eine aufgereihte Anordnung in Längsrichtung zu bevorzugen.

Der Reaktionskörper kann in einem Bereich zwischen den wenigstens zwei Konvertern, insbesondere weitgehend senkrecht zur Wirkrichtung und zur Längsrichtung, eine Einschnürung aufweist.

Bei mehreren Konvertern kann der Reaktionskörper zwischen jedem benachbarten Paar der Konverter eine entsprechende Einschnürung aufweisen. Aufgrund der Einschnürungen kann Material gespart und ein Schwingungsverhalten optimiert werden. Bevorzugt ist die Einschnürung in einer Richtung senkrecht zur Wirkrichtung und zur Längsrichtung symmetrisch.

Zu diesem Zweck kann der Reaktionskörper, insbesondere bei einer Vorrichtung mit mehr als zwei Konvertern, in einem Bereich zwischen zwei in Längsrichtung benachbarten Konvertern auch einen, insbesondere zur Sonotrode hin offenen und vorzugsweise in Wirkrichtung ausgerichteten, Schlitz aufweisen. Der Schlitz tritt dabei quer zur Längsrichtung bevorzugt vollständig durch den Reaktionskörper hindurch. Der Schlitz bildet eine weitere Einschnürung des Reaktionskörpers, mit welcher das Schwingungsverhalten des Reaktionskörpers an die Erfordernisse angepasst werden kann.

Bevorzugt ist in jedem Bereich zwischen zwei in Längsrichtung benachbarten Konvertern ein Schlitz ausgebildet ist. Die Schlitze können dabei wie vorgängig beschrieben ausgebildet sein, insbesondere zur Sonotrode hin offen und vorzugsweise in Wirkrichtung ausgerichtet sein. Bei einer geraden Anzahl von Konvertern kann bei einem mittleren Paar der Schlitz allerdings entfallen.

Vorzugsweise weisen Schlitze, die weiter von einer Längsmitte des Reaktionskörpers beabstandet sind, eine grössere Tiefe auf. Die Tiefe der Schlitze nimmt somit zu, je näher sie bei Längsenden des Reaktionskörpers angeordnet sind. Auf diese Weise kann gezielt das Schwingungsverhalten des Reaktionskörpers, insbesondere zu den Längsenden hin beeinflusst werden.

Gesamthaft kann die Vorrichtung bezüglich einer Ebene senkrecht zur Längsrichtung des Sonotrodenkopfs im Wesentlichen spiegelsymmetrisch ausgebildet sein. Dabei können geringfügige Abweichungen von einer Symmetrie wie z.B. einseitige Anschlüsse für die Konverter vorhanden sein. Die Symmetrieebene erschliesst sich somit diejenige Ebene, welche senkrecht auf der Längsrichtung steht und durch die Längsmitte der Sonotrode und des Reaktionskörpers geht.

Bevorzugt umfasst jeder der wenigstens zwei Konverter wenigstens eine piezoelektrische Keramikplatte, bevorzugt einen Stapel umfassend mehrere piezoelektrische Keramikplatten. Die Keramikplatten sind in der Regel kreisförmig ausgebildet, sodass sich bei einer Stapelung mehrerer Platten ein weitgehend kreiszylindrischer Stapel ergibt. Grundsätzlich können auch beliebige andere Konverter auf der Basis von anderen elektrostriktiven und/oder magnetostriktiven Materialien zum Einsatz kommen.

Die Konverter können jeweils ein Kontaktelement umfassen, welches z.B. als Kontaktplatte ausgebildet ist. Das Kontaktelement ist insbesondere in einem Kontaktbereich zum kontaktieren der Sonotrode am Konverter und/oder auch in einem Kontaktbereich zum kontaktieren des Reaktionskörpers ausgebildet. Die Kontaktplatte kann z.B. ein Metall wie Aluminium umfassen. Das Kontaktelement kann auch als separates Bauteil ausgebildet und zwischen Konverter und Sonotrode und/oder gegebenenfalls zwischen Konverter und Reaktionskörper angeordnet sein. Durch die Kontaktelemente ist ein optimaler thermischer und mechanischer Kontakt der Konverter mit der Sonotrode sichergestellt.

Dabei kann eine gerade Anzahl von Konvertern, insbesondere zwei, vier oder sechs, vorhanden sein. Selbstverständlich können je nach Erfordernis auch ebenso Ausführungen mit einer ungeraden Anzahl von Konvertern zur Anwendung kommen.

Bevorzugt bildet die Sonotrode bei vorgesehenem Betrieb der Vorrichtung in der Wirkrichtung etwa eine viertel Wellenlänge. Die Sonotrode ist in der Regel als Resonator derart ausgebildet, dass ihre Resonanzfrequenz mit der vom eingesetzten Generator zur Verfügung gestellten Frequenz im Wesentlichen übereinstimmt. Bevorzugt wird dabei eine möglichst tiefe und somit in der Regel auch besonders stabile und energetisch günstige Eigenschwingung angeregt.

Mit Vorteil bildet die Vorrichtung bei vorgesehenem Betrieb der Vorrichtung in der Wirkrichtung etwa eine halbe Wellenlänge. Insbesondere lenken bei einer Ausbildung der Vorrichtung als halbe Wellenlänge der Sonotrodenkopf und der Reaktionskörper als freie Enden eines Resonators relativ zu einer Knotenebene gegengleich aus. In der Knotenebene verschwindet eine Amplitude weitgehend. Auf diese Weise liegt, insbesondere bei einer Ausbildung der Sonotrode mit etwa einer viertel Wellenlänge, die Knotenebene der Vorrichtung bei vorgesehenem Betrieb bezüglich der Wirkrichtung in einem Endbereich der Sonotrode bei deren Rückseite.

Im Bereich der Knotenebene kann die Sonotrode und gegebenenfalls die gesamte Vorrichtung an einer feststehenden Haltestruktur befestigt werden, da dort keine bzw. kaum Auslenkungen auftreten. An der Sonotrode ist daher bevorzugt ein aussen umlaufender Haltesims ausgebildet, welcher in einer Ebene senkrecht zur Wirkrichtung bei der Rückseite angeordnet ist und bei vorgesehenem Betrieb der Vorrichtung in der Knotenebene liegt. Es versteht sich, dass hierzu die Komponenten der Vorrichtung entsprechend ausgebildet und aufeinander abgestimmt sind.

Die Erfindung betrifft auch eine Verpackungsanlage, welche eine erfindungsgemässe Vorrichtung zum Verschweissen mittels Ultraschall umfasst. Die Vorrichtung ist dabei bevorzugt am Haltesims der Sonotrode in der Verpackungsanlage gehaltert.

Die Erfindung ist im Folgenden anhand von Abbildungen von exemplarischen Ausführungsbeispielen näher erläutert. Es zeigen schematisch:
- Fig. 1:: eine äussere Schrägansicht einer erfindungsgemässen Vorrichtung zum Verschweissen mittels Ultraschall;
- Fig. 2:: eine Explosionsdarstellung der Ansicht der Fig. 1;
- Fig. 3:: eine Aussenansicht der erfindungsgemässen Vorrichtung in Längsrichtung mit einem schematisch skizzierten Verlauf der Amplituden.

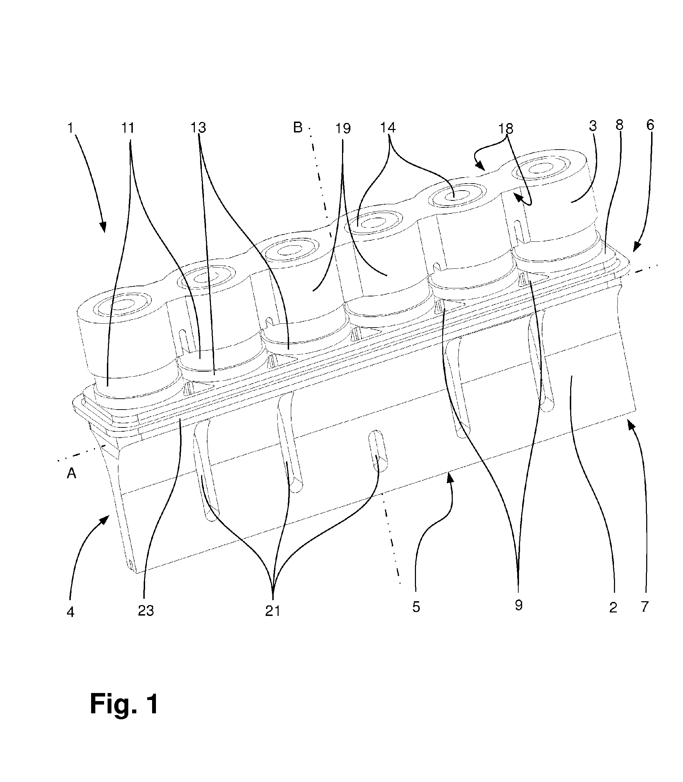

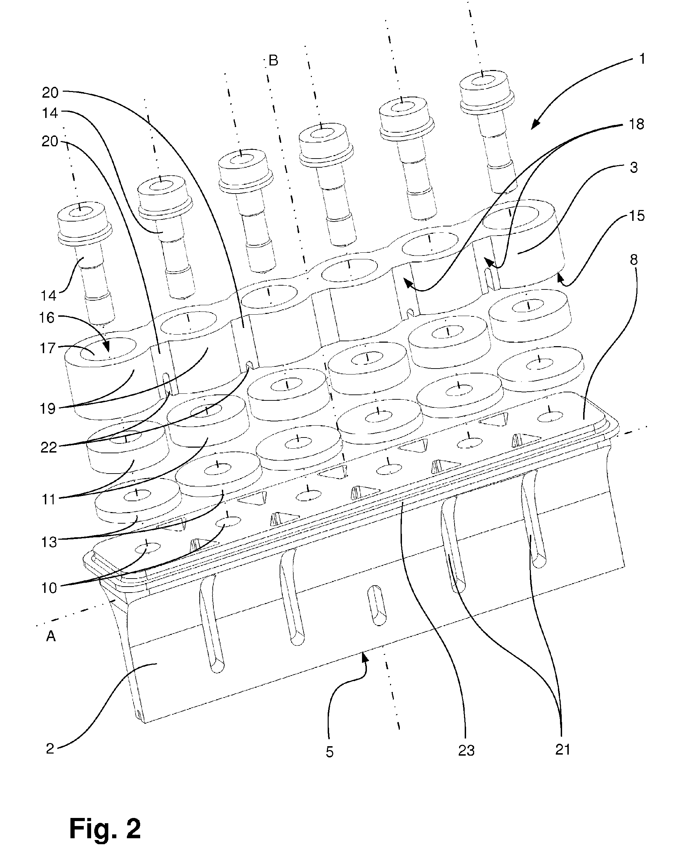

Figur 1 zeigt eine äussere Schrägansicht einer erfindungsgemässen Vorrichtung 1 zum Verschweissen mittels Ultraschall. Die Vorrichtung 1 umfasst eine Sonotrode 2 sowie einen Reaktionskörper 3. Die Sonotrode 2 ist länglich ausgebildet und definiert eine Längsrichtung A. Die Sonotrode 2 ist zum Einbringen von longitudinalen Ultraschallschwingungen in einer Wirkrichtung B ausgebildet, welche senkrecht zu A ausgerichtet ist. Figur 2 zeigt eine Explosionsdarstellung der Ansicht der Fig. 1. Figuren 1 und 2 sind im Folgenden gemeinsam beschrieben.

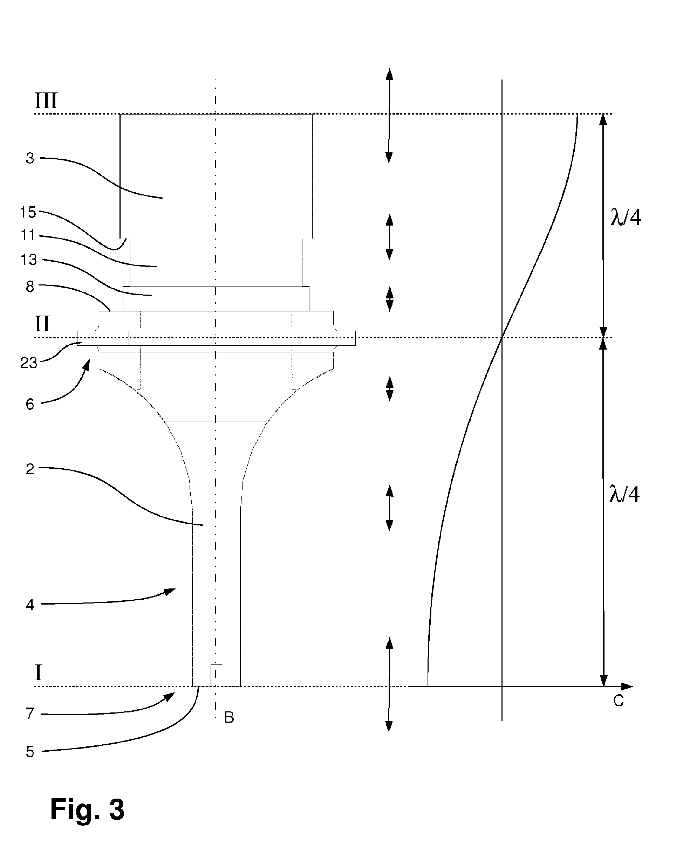

Die Sonotrode 3 weist einen klingenförmig ausgebildeten länglichen Sonotrodenkopf 4 auf. Der Sonotrodenkopf 4 ist längs A ausgerichtet und erstreckt sich im Wesentlichen über die gesamte Länge der Sonotrode 3. "Klingenförmig" bezeichnet eine in Richtung von A weitgehend prismatische Form, welche sich in einem Querschnitt senkrecht zu A in der Wirkrichtung B zumindest abschnittweise von einem Basisbereich 6 zu einem Arbeitsbereich 7 der Sonotrode 2 hin verjüngt. Bevorzugt ist der sich verjüngende Querschnitt zumindest abschnittweise von in Wirkrichtung B zum Arbeitsbereich 7 hin zusammenlaufenden konkaven Kurven begrenzt. Im Arbeitsbereich 7 weist der Sonotrodenkopf 4 vorliegend im Querschnitt weitgehend parallel Flanken auf (siehe hierzu z.B. Fig. 3).

Der Sonotrodenkopf 4 ist im Arbeitsbereich 7 in Wirkrichtung B von einer Schweissfläche 5 begrenzt. Die Schweissfläche 5 weist eine schmale Rechtecksform auf und ist senkrecht zur Wirkrichtung B, mit ihrer Längsrichtung parallel zu A ausgerichtet. Die Schweissfläche 5 bildet einen arbeitsbereichseitigen Abschluss der Sonotrode 2. Mit anderen Worten weist die Sonotrode 2 keine Elemente oder Strukturen auf, welche in Richtung von B über die Schweissfläche 5 hinausragen. An der Schweissfläche 5 ist eine Längsnut längs A ausgebildet, welche einen Eingriffsbereich für ein Messer z.B. eine Verpackungsanlage (nicht dargestellt) bereitstellt, mit welchem das Schweissgut nach einem Schweissvorgang in der Schweissnaht durchtrennt werden kann.

Die Sonotrode 2, insbesondere der Sonotrodenkopf 4, ist in Querrichtung zu A von längs B ausgerichteten Schlitzen 21 durchbrochen. Die Schlitze 21 dienen zur Kompensation von ungewünschten Schwingungsmoden quer zur Wirkrichtung B. Ein in Längsrichtung A mittig ausgebildeter Schlitz ist kürzer ausgebildet, als die weiteren Schlitze 21. Die Schlitze 21 sind in Längsrichtung A jeweils zwischen den Positionen von Konvertern 11 ausgebildet (siehe unten).

Im Basisbereich 6 ist eine Rückseite 8 der Sonotrode 2 ausgebildet, welche von einer im Wesentlichen durchgehenden planen Fläche gebildet ist. Die Rückseite 8 weist stellenweise Aussparungen 9, Durchbrüche und/oder Schraublöcher 10 auf. Die Rückseite 8 ist senkrecht zur Wirkrichtung B und damit parallel zur Schweissfläche 5 ausgerichtet. Die Rückseite 8 bildet in Wirkrichtung B einen basisbereichseitigen Abschluss der Sonotrode 2, d.h. die Sonotrode 2 weist keine Elemente oder Strukturen auf, welche in Richtung von B über die Rückseite 8 hinausragen.

Im Basisbereich 6 ist bei der Rückseite 8 der Sonotrode 2 ein aussen vollständig umlaufender Haltesims 23 angeordnet. Der Haltesims 23 ist als leistenförmiger Vorsprung ausgebildet und verläuft in einer Ebene senkrecht zu B. Die Komponenten der Vorrichtung 1 sind derart bemessen und für den vorgesehenen Betrieb derart aufeinander abgestimmt, dass eine Knotenebene der im vorgesehenen Betrieb angeregten Schwingung mit der Ebene des Haltesimses 23 zusammenfällt. Auf diese Weise ist sichergestellt, dass der Haltesims 23 im Wesentlichen keine Schwingungen ausführt und die Vorrichtung 1 somit am Haltesims 23 an einer festen Struktur z.B. einer Verpackungsanlage befestigt werden kann.

Erfindungsgemäss werden die Ultraschallschwingungen an der Rückseite 8 in die Sonotrode 2 eingebracht. Die Vorrichtung umfasst hierzu sechs Ultraschall-Konverter 11, welche auf der Rückseite 8 der Sonotrode 2 angeordnet sind. Jeder der Konverter 11 umfasst einen Stapel von kreisförmigen piezoelektrischen Keramikplatten (nicht dargestellt), zwischen welchen zur Ansteuerung durch einen Generator (nicht dargestellt) elektrisch leitende Metallschichten angeordnet sind. Jeder der Konverter 11 weist somit eine weitgehend kreiszylindrische Gestalt auf, wobei eine primäre Wirkrichtung der Konverter 11 mit deren Zylinderachse zusammenfällt. Die Stirnseiten der Konverter 11 bilden dabei jeweils zueinander planparallele Anschlussflächen. In den Konvertern 11 sind zudem in deren Längsrichtung hindurch tretende Durchbrüche ausgebildet. Die Durchbrüche dienen als Durchtritte für Schrauben 14, mit welchen der Reaktionskörper 3 an der Sonotrode 2 verschraubt ist.

Die Konverter 11 sind mit ihrer Längsrichtung, d.h. mit ihrer primären Wirkrichtung, parallel zur Wirkrichtung B über jeweils eine Kontaktplatte 13 aus Aluminium auf der Rückseite 8 angeordnet. Die Kontaktplatten 13 sind ebenfalls kreisförmig mit einem zentralen Durchtritt ausgebildet und überlappen die Konverter 11 parallele zur Rückseite 8 geringfügig. Durch die Kontaktplatten 13 ist ein optimaler thermischer und mechanischer Kontakt der Konverter 11 mit der Sonotrode 2 sichergestellt.

Jedem der Konverter 11 ist eines der Schraublöcher 10 der Sonotrode 2 zugeordnet. Die Schraublöcher 10 sind als Sacklöcher ausgebildet und in der Wirkrichtung B ausgerichtet. In Richtung von A sind die Schraublöcher 10 in gleichmässigen Abständen, quer zu A mittig, an der Rückseite 8 der Sonotrode 2 ausgebildet. Die Durchtritte der Konverter 11 sowie der Kontaktplatten 13 fluchten mit den Schraublöchern 10, sodass die Schrauben 14 durch die Durchtritte hindurchragen und in den Schraublöchern 10 verschraubt werden können. Die Konverter 11 sind somit in Längsrichtung A hintereinander aufgereiht angeordnet, wobei benachbarte Konverter 11 einen konstanten Abstand zueinander aufweisen. Die Konverter 11 sind dabei längs A gleichförmig über die Rückseite 8 verteilt, und reichen allseitig im Wesentlichen bis an einen Rand der Rückseite 8 heran.

Auf einer von der Sonotrode 2 abgewandten Seite der Konverter 11 ist der Reaktionskörper 3 angeordnet. Der Reaktionskörper 3 ist als länglicher Balken ausgebildet und mit seiner Längsrichtung parallel zu A ausgerichtet. Der Reaktionskörper 3 ist derart bemessen, dass er in jeder Richtung quer zu B zumindest alle Konverter 11 vollständig überlappt. Eine der Sonotrode 2 zugewandte Seite des Reaktionskörpers 3 ist als weitgehend durchgehende plane Anlagefläche 15 ausgebildet. Die Anlagefläche 15 ist parallel zur Rückseite 8 ausgerichtet und liegt an den von der Sonotrode 2 abgewandten Stirnseiten aller Konverter 11 an.

Der Reaktionskörper 3 weist mit den Schraublöchern 10 fluchtende Durchtritte 16 auf, durch welche die Schrauben 14 hindurch ragen. Bei jedem Durchtritt 16 ist auf einer von der Sonotrode 2 abgewandten Seite eine Aussparung 17 ausgebildet, in welcher ein Schraubenkopf der Schrauben 14 angeordnet und am Reaktionskörper 3 abgestützt ist. Die Anlagefläche 15 und die von der Sonotrode 2 abgewandte Seite des Reaktionskörpers 3 sind planparallel ausgebildet.

Der Reaktionskörper 3 ist über die Schrauben 14 an der Sonotrode 2 befestigt. Dabei sind die Konverter 11 zwischen der Rückseite 8 der Sonotrode 2 und der Anlagefläche 15 des Reaktionskörpers 3 fest eingeklemmt. Indem die Schrauben 14 zentral durch die Durchtritte der Konverter 11 hindurchragen, sind die Konverter 11 zum einen gegen eine Verschiebung quer zu B gesichert und werden zum anderen optimal, über die Kontaktplatten 13, an die Rückseite 8 und direkt an die Anlagefläche 15 gepresst. Damit wird ein optimaler thermischer und mechanischer Kontakt zwischen den Konvertern 11 und der Sonotrode 2 einerseits sowie dem Reaktionskörper 3 andererseits sichergestellt.

Der Reaktionskörper 3 weist in Bereichen zwischen den Konvertern 11 in Richtung quer zu A und B Einschnürungen 18 auf, welche Anlagebereiche 19 für die Konverter 11 definieren. Die Einschnürungen 18 sind derart ausgebildet, dass die Anlagebereiche 19 weitgehend kreisförmig ausgebildet sind und die Konverter 11 in jeder Richtung senkrecht zu B jeweils geringfügig überlappen. Der Reaktionskörper 3 weist somit in einer Draufsicht längs B die Gestalt aneinander gereihter kreisförmiger Abschnitte 19 auf, welche an den Stellen der Einschnürungen 18 über Stege 20 miteinander verbunden sind.

In einigen der Stege 20 sind längs B ausgerichtete Schlitze 22 ausgebildet, welche in Richtung quer zu A vollständig durch den Reaktionskörper 3 hindurchtreten. Die Schlitze 22 sind dabei an der Anlagefläche 15 zur Sonotrode 2 hin offen. Am Steg 20 zwischen den zwei mittleren Konvertern 11 ist kein Schlitz ausgebildet. An den benachbarten Stegen 20 sind Schlitze 22 ausgebildet, welche eine erste Tiefe in Richtung von B aufweisen. Die zu den Längsenden des Reaktionskörpers 3 nächsten Stege 20 weisen Schlitze 22 auf, welche eine zweite, grössere Tiefe in Richtung von B aufweisen. Auf diese Weise wird erreicht, dass der Reaktionskörper 3 eine mit seiner Längsrichtung veränderliche Schwingungscharakteristik aufweist um z.B. ungewünschte Schwingungsmoden zu kompensieren. Je nach Anforderung bzw. in Abhängigkeit der Ausbildung er Sonotrode oder anderer Komponenten der Vorrichtung können die Schlitze der Stege auch anders ausgebildet sein.

Figur 3 zeigt eine Aussenansicht der Vorrichtung 1 längs A, wobei schematisch ein Verlauf der Amplitude C in Abhängigkeit einer Position längs B der im vorgesehenen Betrieb angeregten Schwingung skizziert ist. Position I bei der Schweissfläche 5 im Arbeitsbereich 7 der Sonotrode 2 weist eine maximale Amplitude auf. An der Position II befindet sich die Knotenebene, an welcher die Amplitude weitgehend verschwindet. Bei Position III an der von der Sonotrode 2 abgewandten Seite des Reaktionskörpers 3 schwingt der Reaktionskörper 3 ebenfalls mit einer maximalen Amplitude. Ein Abstand von der Schweissfläche 5 zum Haltesims 23, welcher in der Knotenebene liegen soll, beträgt somit ein Viertel der Wellenlänge der im vorgesehenen Betrieb angeregten Schwingung. Entsprechend ist die Sonotrode 2 an die gewünschte Betriebsfrequenz z.B. hinsichtlich des Materials, der Form, der Dimension etc. angepasst auszubilden. Analoges gilt für die weiteren Komponenten wie z.B. die Konverter 11 und den Reaktionskörper 3. Gesamthaft ergibt die Vorrichtung 1 somit einen Resonator mit eine halben Wellenlänge der im vorgesehenen Betrieb angeregten Schwingung.

## Patentansprüche

1. Vorrichtung (1) zum Verschweissen mittels Ultraschall, umfassend
- eine Sonotrode (2) mit einem länglichen Sonotrodenkopf (4), an welchem eine in Längsrichtung des Sonotrodenkopfs (4) ausgerichtete längliche Schweissfläche (5) ausgebildet ist,
- wenigstens zwei Konverter (11) zur Anregung von Ultraschallschwingungen der Sonotrode (2) in einer Wirkrichtung (B), wobei die Wirkrichtung (B) bevorzugt im Wesentlichen senkrecht zur Längsrichtung (A) des Sonotrodenkopfs (14) ausgerichtet ist,
- einen Reaktionskörper (3) als Reaktionsmasse,
**dadurch gekennzeichnet, dass**
die wenigstens zwei Konverter (11) zwischen der Sonotrode (2) und dem Reaktionskörper (3) angeordnet sind.

2. Vorrichtung (1) gemäss Anspruch 1, **dadurch gekennzeichnet, dass** die Sonotrode (2) eine weitgehend durchgehende, insbesondere plane, Rückseite (8) aufweist, welche der Schweissfläche (5) in der Wirkrichtung (B) gegenüberliegt und an welcher die wenigstens zwei Konverter (11) anliegen.

3. Vorrichtung (1) gemäss einem der Ansprüche 1 oder 2, **dadurch gekennzeichnet, dass** der Reaktionskörper (3) sonotrodenseitig eine, insbesondere plane, Anlagefläche (15) aufweist, an welcher die wenigstens zwei Konverter (11) anliegen.

4. Vorrichtung (1) gemäss Anspruch 3, **dadurch gekennzeichnet, dass** die Anlagefläche (15) des Reaktionskörpers (3) und die Rückseite (8) der Sonotrode (2) weitgehend parallel ausgerichtet sind.

5. Vorrichtung (1) gemäss einem der Ansprüche 1 bis 4, **dadurch gekennzeichnet, dass** die wenigstens zwei Konverter (11) zwischen dem Reaktionskörper (3) und der Sonotrode (2) eingeklemmt sind.

6. Vorrichtung (1) gemäss einem der Ansprüche 1 bis 5, **dadurch gekennzeichnet, dass** jedem der wenigstens zwei Konverter (11) eine Schraube (14) zugeordnet ist, mit welcher der Reaktionskörper (3) mit der Sonotrode (2), insbesondere durch einen Durchtritt in dem jeweiligen Konverter (11) hindurch, verschraubt ist.

7. Vorrichtung (1) gemäss einem der Ansprüche 1 bis 6, **dadurch gekennzeichnet, dass** der Reaktionskörper (3) länglich, insbesondere als Balken, ausgebildet ist und mit seiner Längsrichtung parallel zur Längsrichtung (A) des Sonotrodenkopfs (4) ausgerichtet ist.

8. Vorrichtung (1) gemäss einem der Ansprüche 1 bis 7, **dadurch gekennzeichnet, dass** die wenigstens zwei Konverter (11) in Längsrichtung (A) des Sonotrodenkopfs (4) hintereinander angeordnet sind.

9. Vorrichtung (1) gemäss einem der Ansprüche 1 bis 8, **dadurch gekennzeichnet, dass** der Reaktionskörper (3) in einem Bereich zwischen den wenigstens zwei Konvertern (11), insbesondere weitgehend senkrecht zur Wirkrichtung (B) und zur Längsrichtung (A), eine Einschnürung (18) aufweist.

10. Vorrichtung (1) gemäss einem der Ansprüche 1 bis 9, insbesondere mit mehr als zwei Konvertern (11), **dadurch gekennzeichnet, dass** der Reaktionskörper (3) in einem Bereich zwischen zwei in der Längsrichtung (A) benachbarten Konvertern (11) einen, insbesondere zur Sonotrode (2) hin offenen und vorzugsweise in Wirkrichtung (B) ausgerichteten, Schlitz (22) aufweist.

11. Vorrichtung (1) gemäss Anspruch 10, **dadurch gekennzeichnet, dass,** vorzugsweise ausser bei einem mittleren Paar im Falle einer geraden Anzahl von Konvertern (11), in jedem Bereich zwischen zwei in Längsrichtung benachbarten Konvertern (11) ein Schlitz (22) ausgebildet ist, wobei vorzugsweise Schlitze (22), die weiter von einer Mitte beabstandet sind, eine grössere Tiefe aufweisen.

12. Vorrichtung (1) gemäss einem der Ansprüche 1 bis 11, **dadurch gekennzeichnet, dass** die Sonotrode (2) bezüglich einer Ebene senkrecht zur Längsrichtung des Sonotrodenkopfs (4) im Wesentlichen spiegelsymmetrisch ausgebildet ist.

13. Vorrichtung (1) gemäss einem der Ansprüche 1 bis 12, **dadurch gekennzeichnet, dass** jeder der wenigstens zwei Konverter (11) wenigstens eine piezoelektrische Keramikplatte, bevorzugt einen Stapel von piezoelektrischen Keramikplatten, umfasst.

14. Vorrichtung (1) gemäss einem der Ansprüche 1 bis 13, **dadurch gekennzeichnet, dass** eine gerade Anzahl von Konvertern (11), insbesondere zwei, vier oder sechs, vorhanden ist.

15. Vorrichtung (1) gemäss einem der Ansprüche 1 bis 14, **dadurch gekennzeichnet, dass** bei vorgesehenem Betrieb der Vorrichtung (1) die Sonotrode (2) in der Wirkrichtung (B) etwa eine viertel Wellenlänge bildet.

16. Vorrichtung (1) gemäss einem der Ansprüche 1 bis 15, **dadurch gekennzeichnet, dass** bei vorgesehenem Betrieb der Vorrichtung die Vorrichtung (+) in der Wirkrichtung (B) etwa eine halbe Wellenlänge bildet.

17. Vorrichtung (1) gemäss einem der Ansprüche 1 bis 16, **dadurch gekennzeichnet, dass** an der Sonotrode (2) ein aussen umlaufender Haltesims (23) ausgebildet ist, welcher in einer Ebene senkrecht zur Wirkrichtung (B) bei der Rückseite (8) angeordnet ist und bei vorgesehenem Betrieb der Vorrichtung (1) in einer Knotenebene liegt.

18. Verpackungsanlage mit einer Vorrichtung (1) zum Verschweissen gemäss einem der Ansprüche 1 bis 17.
